# EUROPEAN PATENT APPLICATION

(11) **EP 3 293 634 A1**
(43) Date of publication of application: **14.03.2018**
(21) Application number: 16187970.5
(22) Date of filing: 09.09.2016
(51) Int. Cl.: G06F 9/54

(54) **PROCESS FOR REALIZATION OF COPY & PASTE FUNCTION BETWEEN DIFFERENT COMPUTERS**

(71) Applicant: Deutsche Telekom AG, 53113 Bonn (DE); Technische Universität Berlin, 10625 Berlin (DE)
(72) Inventor: ROSHANDEL, Mehran, 13591 Berlin (DE); GHASEMI, Saeed, 13509 Berlin (DE)
(74) Representative: Vossius & Partner Patentanwälte Rechtsanwälte mbB

(57) **Abstract**

The invention is related to a realization of a copy-and-paste function, and in particular to a copy-and-paste function working between different computers, i. e., a copy-and-paste function that allows the copy process to be performed on one computer, while the corresponding paste process may be performed on a second computer.

## Description

### Field of the Invention

The invention is related to a realization of a copy-and-paste function (in the following also simply referred to as "copy & paste"), and in particular to a copy-and-paste function working between different computers, i. e., a copy-and-paste function that allows the copy process to be performed on one computer, while the corresponding paste process may be performed on a second computer.

### Background of the Invention

Using multiple computers (machines) for different intensions at work is becoming a normal manner. In this case it is likely that one uses one single monitor, e. g. a large monitor, as the main screen for any of the computers. But the case is likely, too, that one wishes to copy certain content (e. g. text, URL, picture, file, etc.) from one computer to another. Of course, there are multiple state-of-the-art approaches for this. However, they all reveal more or less time consuming and may not be the optimal solution in this case. In current age that can be viewed as a new era of information sharing, it is important to find an approach, which enables one to easily transfer content as fast as possible from one computer to another computer on one's desk.

### State of the art

**LAN:** In a local network, a number of computers are connected to each other. Although a LAN network usually exhibits a high data transfer rate, it reveals too big and expensive when it comes to simply copy & paste content such as text based data, URLs, etc. from one computer to another. This is because a LAN needs some necessary infrastructure; one must have at least some wiring and equipment (e. g. switch, server, etc.).

**E-mail:** E-mail servers can also be used as a media for transferring some data like pictures and text. However, mailing something but for the reason of copy & paste appears quite cumbersome and time consuming.

**Cloud:** Personal cloud storage services (sometimes referred to as online backup services) such as "Dropbox" are frequently used for file sharing and collaboration. For example, the Dropbox application is available for Windows, Macintosh and Linux desktop operating systems. There are also apps for iPhone, iPad, Android, and BlackBerry devices. However, this is not practically in case one wishes to frequently copy contents from one computer to another. Of course, it is possible to generate an extra document for collecting and storing the strings or other content to be copied therein, to save it, wait until it is stored on the server and then open it on other computer in order to copy the content again and use it.

**Flash memory:** Flash memory is a type of nonvolatile memory that erases data in units called blocks. A block stored on a flash memory chip must be erased before data can be written, or programmed, to the microchip. Flash memory retains data for an extended period of time whether a flash-equipped device is powered on or off. However, it is clear that first connecting the flash memory with a first computer, disconnecting it and then connecting it to a second computer is by far too cumbersome and time consuming for the purpose of copy & paste.

Consequently, there is a need for a method and a system that allows for an easy and fast process of copying content from one computer and pasting the content onto another computer.

The object of the present invention is thus the provision of a method and a system, which enables a user to easily and quickly copy content from one computer and paste the content onto another computer.

This object is achieved by the method and the system with the features of the present claims.

The technology, i. e. the method and the system, according to the invention can be used as a smart interface between different workplaces (machines) that allows for copying content from a machine and transferring it to another machine in a simple and fast way.

### Summary of the invention

The method and system according to the invention implement the idea of "simple copy & paste" of content, in particular of written content (strings/text), but also of other content such as pictures, files, etc. among the computers being currently in use. It employs a control device such as a keyboard and/or a mouse, preferably a keyboard with an integrated mouse. The control device has an internal (i. e. integrated) memory, which is appropriate for storing data, e. g. string data, and then transfer it to an arbitrary target computer.

Of course, copying content from a computer means that content being exhibited / provided by or in a program / application running on a computer becomes copied, by the user via the control device into a suitable buffer, which is in case of the invention located in the internal memory of the control device. Correspondingly, pasting content on a computer means that content stored in the buffer becomes pasted into a program / application running on a computer.

One aspect of the invention relates to a method for performing a copy and paste action between different computers, wherein a control device is connected to a switching appliance, wherein the switching appliance is connected to at least two computers, and wherein a copy-button and a paste-button are provided on the control device. The method comprises the following steps:
a) selecting, with the control device, content in a document shown or an application running on a first computer, wherein the first computer is connected to the control device via the switching appliance;
b) waiting, by the control device, for the copy-button to be pressed;
c) transferring the selected content to and storing the selected content on a memory integrated in the control device;
d) terminating, by the switching appliance, the connection of the control device to the first computer and
   establishing, with the switching appliance, a connection to a second computer different from the first computer;
e) selecting, with the control device, a position in a document shown or an application running on the second computer;
f) waiting, by the control device, for the paste-button to be pressed;
g) transferring the content stored on the memory integrated in the control device to the document shown or the application running on the second computer so as to insert the content onto the position selected in step e).

In this context, the term "computer" refers to any device having an output device (e. g. a screen), a CPU, and are connectable with the control device. In particular, the term "computer" encompasses PCs/desktops, notebooks/laptops, tablets, and smartphones.

Further, the term "switching appliance" refers to a device that is connected to the control device and to any one of a plurality (i. e. two or more) of computers. Thereby, the switching appliance is configured to establish a connection between the control device and any one of the computers, wherein preferably at a given time, the control device is only connected to a single computer from the plurality of computers, the remaining computers, however, are disconnected from the control device at this time. The user can select, by the switching appliance, the computer to be connected with the control device; in other words, the user may switch, by the switching appliance, between different computers to be controlled by the control device.

A further aspect of the invention relates to a system for performing a copy and paste action between different computers according to the method described above. The system comprises: a control device, a switching appliance, and at least two computers. The control device is connected or connectable to the switching appliance, and the switching appliance is connected or connectable to each of the computers. Further, the switching device is configured to allow the user to establish a connection between the control device and any one of the computers. The control device has an integrated memory, a copy-button, and a paste-button. Moreover, the control device is configured for:
selecting content being presented in a document shown or an application running on at least one of the computers;
triggering, when the copy-button is pressed, the transfer of selected content from the computer with which the control device is connected via the switching appliance to the integrated memory;
storing content in the integrated memory;
selecting a position in a document shown or an application running on the computer with which the control device is connected via the switching appliance;
triggering, when the paste-button is pressed, the transfer of the content stored in the integrated memory to the computer with which the control device is connected via the switching appliance and the inserting of said content in a previously selected position in a document shown or an application running on said computer.

In one embodiment of the method or the system, the control device comprises a mouse and/or a keyboard to allow for user interaction. Preferably, the control device comprises a keyboard with an integrated mouse.

Preferably, in the method or system according to the invention, the switching appliance is integrated in the control device.

In a preferred embodiment of the method or system according to the invention, the switching appliance is accommodated in a housing separated from the control device, and the user is allowed to select by the switching device, which of the computers becomes connected with the control device.

In one embodiment of the method or system according to the invention, the content comprises at least one of text, images, video, audio, and files.

Preferably, in the method or system according to the invention, the control device is connected or connectable wirelessly, for example via Bluetooth or radio, to the switching appliance.

Preferably, in the method or system according to the invention, the switching device is connected or connectable wirelessly, for example via Bluetooth or radio, to each of the computers.

Alternatively, in the method of system according to the invention, the control device is connected via cable to the switching appliance, and/or the switching device is connected via cable to each of the computers.
Other aspects, features, and advantages will be apparent from the summary above, as well as from the description that follows, including the figures and the claims.

### List of figures:

Fig. 1: Schematic illustration of realization and working mechanism of the invention; and
Fig. 2: Schematic illustration of another realization and work principle of the invention.

### Process for realization of copy & paste function between different computers (preferred approach)

By exploiting a mechanism according to the invention as described above in general terms, word and sentence transition will in particular be simplified. This approach aims at accelerating the text based transition between two or more computers. However, the approach is, of course, not limited to a copy-and-paste function of strings: pictures, audio, video, files, etc. can as well be handled, depending on the dimensioning of the system in particular with respect to memory (see below).

The basic idea is to employ a mouse-keyboard device having an internal memory/RAM. These devices (mouse and keyboard) are connected to all computers (being parallel in work). Then, the mouse is waiting for any "copy" order to be given by the user. More precisely, when the user marks certain content such as part of a text or even a whole page and then gives a "copy" commend, the content is first transferred and stored onto the internal memory of the keyboard-mouse device. Then, the content waits to be transferred onto the same or another computer being currently in use. The keyboard-mouse device will also have a "paste" button, which is adapted to be used for pasting a desired content (e. g. text) at any arbitrary times onto any arbitrary machines.

Using this approach enables one to copy any written context from diverse resources (e. g. a scientific text, a URL, a part of an interesting article, a paragraph of your own paper etc.) from a computer currently in use to another computer being "soon" in use. As an example, imagine a person working on a scientific paper using three different computers at the same time: On the first computer he/she has a word document, which is open for writing the paper. On the second computer, a number of browsers are open and the person is searching for a specific result related to his/her research. Eventually, on the third computer the person does some experimental works (with likely corresponding peripheral devices) using different software related to his/her scientific work.

Now the person found a formula on a scientific website that he/she wants to use in the paper. On the other hand, his/her third computer shows some important results that he/she is going to adopt into his/her paper. Without using the solution according to the present invention, the person must spend a lot of time for typing all results into his/her paper. For giving the reference of the site he/she should type the whole address which is often extremely tedious and time consuming.

However, using the present invention makes the person able to simplify his/her work and eliminate the time consuming typing. In this case the keyboard-mouse that is installed on all computers and is currently connected to the first computer can switch to the second computer and store the formula found on the internet as well as its source (the URL of the web site) in its memory, then switch to the first computer and paste the content stored in the memory into the paper. The next step is switching to the third computer and copying the desired results, which are necessary for the paper, then come back to the first computer and paste the content into the paper again. The work can be continued further in this way. This way, the complete copy-and-paste operations can be done within a few seconds, which gives one the feeling of working on a single (super) computer with three monitors.

This innovation can be realized in two ways:
1. Using a keyboard/mouse switch box: In this approach, an extra device (the so called switch box) enables the interaction and allows for switching between different computers. After each switch, one can do some copy/paste interaction to or from the computer that is currently connected to the switch box.
2. Integrating a wireless switch mechanism in the mouse/keyboard mouse: Using this method is less tedious so that one can do everything with a single keyboard-mouse device, which is able to switch itself wirelessly between all computers.

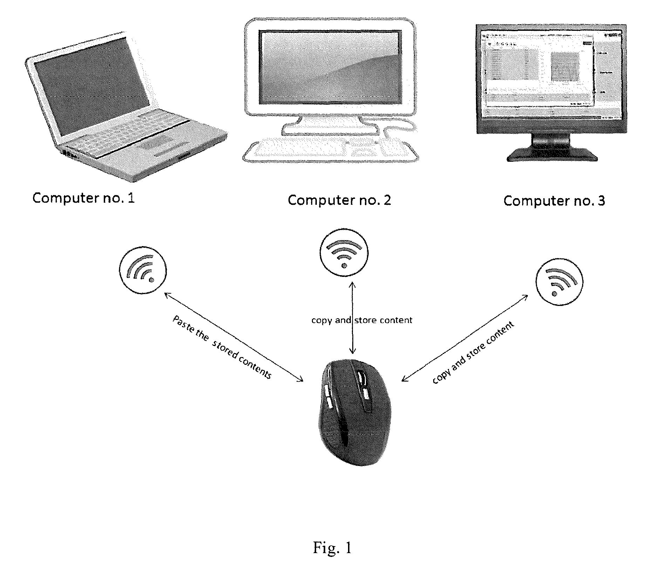

Figure 1 illustrates the working mechanism of the method and the system according to the above described example (i. e. the case that the keyboard-mouse device can switch wirelessly).

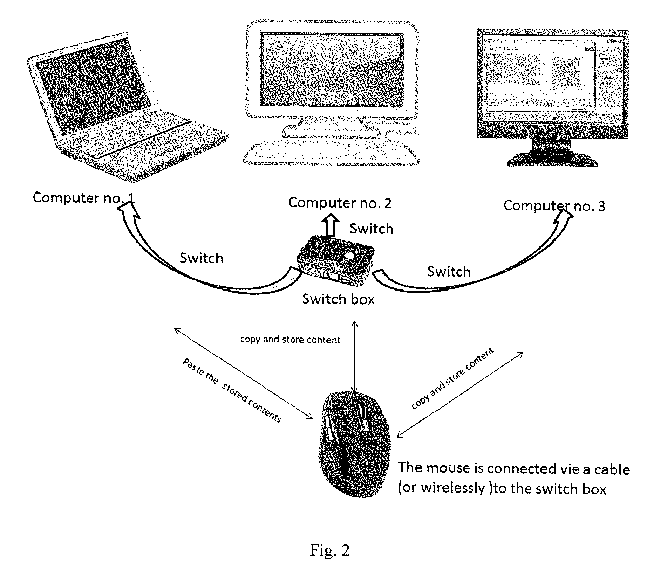

In case that one does not have such a mouse or keyboard-mouse device as illustrated in Figure 1, a switch box is connected to all computers and the keyboard-mouse device is connected to that switch box. Switching is done by the switch box (as explained above). Figure 2 illustrates the working mechanism of the present invention in case of using a switch box.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. Method for performing a copy and paste action between different computers,
wherein a control device is connected to a switching appliance,
wherein the switching appliance is connected to at least two computers, and
wherein a copy-button and a paste-button are provided on the control device,
comprising the steps:
a) selecting, with the control device, content in a document shown or an application running on a first computer, wherein the first computer is connected to the control device via the switching appliance;
b) waiting, by the control device, for the copy-button to be pressed;
c) transferring the selected content to and storing the selected content on a memory integrated in the control device;
d) terminating, by the switching appliance, the connection of the control device to the first computer and
establishing, with the switching appliance, a connection to a second computer different from the first computer;
e) selecting, with the control device, a position in a document shown or an application running on the second computer;
f) waiting, by the control device, for the paste-button to be pressed;
g) transferring the content stored on the memory integrated in the control device to the document shown or the application running on the second computer so as to insert the content onto the position selected in step e).

2. A system for performing a copy and paste action between different computers according to the method of claim 1, comprising:
a control device;
a switching appliance;
at least two computers;
wherein the control device is connected or connectable to the switching appliance,
wherein the switching appliance is connected or connectable to each of the computers;
wherein the switching device is configured to allow the user to establish a connection between the control device and any one of the computers;
wherein the control device has an integrated memory, a copy-button, and a paste-button;
wherein the control device is configured for:
selecting content being presented in a document shown or an application running on at least one of the computers;
triggering, when the copy-button is pressed, the transfer of selected content from the computer with which the control device is connected via the switching appliance to the integrated memory;
storing the content in the integrated memory;
selecting a position in a document shown or an application running on the computer with which the control device is connected via the switching appliance;
triggering, when the paste-button is pressed, the transfer of the content stored in the integrated memory to the computer with which the control device is connected via the switching appliance and the inserting of said content in a previously selected position in a document shown or an application running on said computer.

3. The method of claim 1 or the system of claim 2, wherein the control device comprises a mouse and/or a keyboard, preferably the control device comprises a keyboard with an integrated mouse.

4. The method or system of any one of claims 1 to 3, wherein the switching appliance is integrated in the control device.

5. The method or system of any one of claims 1 to 4, wherein the switching appliance is accommodated in a housing separated from the control device, and wherein the user is allowed to select by the switching device, which of the computers becomes connected with the control device.

6. The method or system of any one of claims 1 to 5, wherein the content comprises at least one of text, images, video, audio, and files.

7. The method or system of any one of claims 1 to 6,
wherein the control device is connected or connectable wirelessly, for example via Bluetooth or radio, to the switching appliance; and/or
wherein the switching device is connected or connectable wirelessly, for example via Bluetooth or radio, to each of the computers.

8. The method of system of any one of claims 1 to 6,
wherein the control device is connected via cable to the switching appliance; and/or
wherein the switching device is connected via cable to each of the computers.

9. A control device being configured to be used in the method or the system according to any one of the foregoing claims,
the control device having:
a copy-button and a paste-button;
an integrated memory being configured for storing at least one of text, images, video, audio, and files; and
the control device being further configured for:
being connected, via switching appliance, with at least two computers;
selecting, when being connected one of the computers, content being presented in a document shown or an application running on the computer with which the control device is connected via the switching appliance;
triggering, when the copy-button is pressed, the transfer of selected content from the computer with which the control device is connected via the switching appliance to the integrated memory;
storing the content in the integrated memory;
selecting a position in a document shown or an application running on the computer with which the control device is connected via the switching appliance;
triggering, when the paste-button is pressed, the transfer of the content stored in the integrated memory to the computer with which the control device is connected via the switching appliance and the inserting of said content in a previously selected position in a document shown or an application running on said computer.

10. The control device of claim 9, wherein the switching appliance is integrated in the control device.

11. The control device of claim 9 or 10, wherein the control device is a mouse.

12. The control device of claim 9 or 10, wherein the control device is a keyboard.

13. The control device of claim 9 or 10, wherein the control device is a keyboard with an integrated mouse.
